# EUROPEAN PATENT SPECIFICATION

(11) **EP 4 379 585 B1**
(45) Date of publication and mention of the grant of the patent: **09.04.2025**
(21) Application number: 23205965.9
(22) Date of filing: 26.10.2023
(51) Int. Cl.: G06Q 30/018, G06F 21/57, G06F 9/455, H04L 9/40, G06Q 30/0601

(54) **METHOD FOR SECURING MARKETPLACE IN CLOUD AND APPARATUS THEREOF**
VERFAHREN ZUR SICHERUNG EINES MARKTPLATZES IN EINER CLOUD UND VORRICHTUNG DAFÜR
PROCÉDÉ DE SÉCURISATION DE MARCHÉ EN NUAGE ET APPAREIL ASSOCIÉ

(30) Priority: 02.12.2022 KR 20220166865
(43) Date of publication of application: 05.06.2024
(73) Proprietor: Samsung SDS Co., Ltd., Seoul (KR)
(72) Inventor: Kim, Eunkyung, SEOUL 05510 (KR); Cho, Jihoon, SEOUL 05510 (KR)
(74) Representative: Glawe, Delfs, Moll

(56) References cited:
- US-A1- 2017 279 781
- US-B2- 9 158 909

## Description

### BACKGROUND OF THE INVENTION

### 1. Field of the invention

The disclosure relates to a marketplace security technology provided by a cloud service provider and, more particularly, to a method and apparatus for enabling a cloud service customer to safely use a virtual machine image registered with a marketplace.

### 2. Description of the Prior Art

A marketplace has the meaning of a market, and the concept thereof in the cloud refers to a space for enabling users to conveniently install and use various types of things in a virtual machine (VM) or to trade a solution provided in the form of a VM. As a more comprehensive example, there may be a concept such as Google play store, Apple app store, or the like used in a mobile terminal.

Currently, a few large enterprises that provide cloud services are providing marketplace services. Cloud service customers are capable of purchasing various solutions (i.e., programs) via those marketplace services, and a distribution method for the corresponding solutions is mainly provided in the form of a VM. Marketplaces are being developed to a form in which a cloud service provider (CSP) registers its solution with a marketplace and provides the same, in addition to a general form of registering only a solution of a foreign company or an individual with a marketplace.

As the number of marketplace services that use the cloud is gradually increased, there is a desire for a security technology that enables a cloud service customer to safely use VM images provided from various vendors (i.e., VM service providers). That is, in a process in which a VM service provider registers a VM image with a marketplace or a process in which a cloud service customer downloads a VM image registered with the marketplace and operates a VM instance, there may be a desire for a method of identifying whether the corresponding VM image is forged/falsified. A system and method for secure cloud computing is known from document US 2017/0279781 A1 and an authentication method of a virtual machine image using digital certificates is known from US 9,158,909 B2.

### SUMMARY OF THE INVENTION

An object of the disclosure is to overcome the above-described drawback and other drawbacks. Another object of the disclosure is to provide a method and apparatus for identifying whether a VM image is forged/falsified at the point in time at which a VM service provider registers the corresponding VM image with a marketplace of a cloud service provider (CSP).

Another object of the disclosure is to provide a method and apparatus for identifying whether a VM image is forged/falsified at the point in time at which a cloud service customer operates the corresponding VM image downloaded from a marketplace of a cloud service provider (CSP). At least one of the objects mentioned above is solved by the subject matter of the independent claims. Preferable embodiments are described in the dependent claims.

According to an aspect of the disclosure, there is provided a marketplace security method implemented by a cloud service provider (CSP), the method including an operation of downloading a virtual machine (VM) image selected by a cloud service customer from the marketplace into a cloud space of the corresponding cloud service customer, an operation of obtaining an electronic signature associated with the downloaded VM image in response to an operation request from the cloud service customer, an operation of verifying the obtained electronic signature, and an operation of determining, based on a verification result, whether to operate a VM instance corresponding to the downloaded VM image.

The marketplace security method further comprises, in response to a download request from the cloud service customer, obtaining an authentication certificate associated with a VM service provider that provides the selected VM image; and by verifying the obtained authenticated certificate, determining whether to download the selected VM image.

Herein, the obtaining comprises obtaining the electronic signature from a storage of the cloud service provider or from a VM service provider that provides the VM image. The determining comprises identifying, by verifying the electronic signature, whether the VM image downloaded from the marketplace is forged/falsified.

The marketplace security method further comprises allocating a trusted platform module (TPM) and verifying whether the VM instance normally operates in a case of operating the VM instance.

The marketplace security method further comprises, when a message for requesting registration of a VM image is received from a virtual machine (VM) service provider, determining whether to register the VM image with the marketplace using at least one of an electronic signature or an authentication certificate.

Herein, the request message comprises at least one of a VM image, an authentication certificate, and an electronic signature.

According to another aspect of the disclosure, there is provided a marketplace security apparatus including one or more processors and a memory, wherein the one or more processors are configured to download a virtual machine (VM) image selected by a cloud service customer from a marketplace to a cloud space of the corresponding cloud service customer, to obtain an electronic signature associated with the downloaded VM image in response to an operation request from the cloud service customer, to verify the obtained electronic signature, and to determine, based on a verification result, whether to operate a VM instance corresponding to the downloaded VM image.

The one or more processors are configured to: obtain an authentication certificate associated with a VM service provider that provides the selected VM image in response to a download request from the cloud service customer; and determine, by verifying the obtained authentication certificate, whether to download the selected VM image.

The one or more processors are configured to obtain the electronic signature from a storage of a cloud service provider or from a VM service provider that provides the VM image.

The one or more processors are configured to identify, by verifying the electronic signature, whether the VM image downloaded from the marketplace is forged/falsified.

The one or more processors are further configured to perform allocating of a trusted platform module (TPM) so as to verify of whether the VM instance normally operates in a case of operating the VM instance.

The one or more processors are further configured to, when a message for requesting registration of a VM image is received from a virtual machine (VM) service provider, determine whether to register the VM image with the marketplace using at least one of an electronic signature or an authentication certificate.

Herein, the request message comprises at least one of a VM image, an authentication certificate, and an electronic signature.

### BRIEF DESCRIPTION OF THE DRAWINGS

For a better understanding of the disclosure, embodiments and technical features of the disclosure will be described with reference to the following description taken in conjunction with the accompanying drawings, in which:
FIG. 1 is a diagram illustrating the timeline of a marketplace service provided by a cloud service provider (CSP) ;
FIG. 2A is a flowchart illustrating a process of authenticating a VM service provider in the case of registration of a vendor;
FIG. 2B is a diagram to which reference is made, in order to describe the authentication process of FIG. 2A;
FIG. 3A is a flowchart illustrating a process of verifying a VM image obtained from a VM service provider in the case of registration of a VM image;
FIG. 3B is a diagram to which reference is made, in order to describe the verification process of FIG. 3A;
FIG. 4A is a flowchart illustrating a process of verifying a VM image downloaded from a marketplace in the case of operation of a VM instance;
FIG. 4B is a diagram to which reference is made, in order to describe the verification process of FIG. 4A; and
FIG. 5 is a block diagram illustrating the configuration of a computing device according to an embodiment of the disclosure.

### DETAILED DESCRIPTION OF THE EXEMPLARY EMBODIMENTS

Hereinafter, reference will now be made to embodiments, which are illustrated in the accompanying drawings, wherein like reference numerals may refer to like component elements throughout and duplicated description thereof will be omitted. An ending word used for a component element, such as "module" and "unit", is assigned or used for ease of drafting the specifications, and may not have a distinguishing meaning or role. In this instance, the term "unit" used in the disclosure may refer to a software component element or a hardware component element such as a FPGA or an ASIC, and "unit" may perform some functions. However, "unit" is not limited to software or hardware. "unit" may be configured to be contained in an addressable storage medium, or may be configured to reproduce one or more processors. Therefore, for example, "unit" may include component elements such as software component elements, object-oriented software component elements, class component elements, and task component elements, processes, functions, attributes, procedures, sub-routines, segments of a program code, drivers, firmware, microcode, circuit, data, database, data structures, tables, arrays, and variables. A function provided in the component elements and "units" may be implemented by coupling the functions of a smaller number of component elements and "units" or may be implemented by distributing the function to additional component elements and "units".

In addition, when it is determined that detailed descriptions related to a well-known related technical art make the subject matter of the embodiments disclosed in the specification unclear, the detailed descriptions will be omitted herein. In addition, the attached drawings are merely to help understanding of embodiments disclosed in the specification, and it should be understood that the attached drawings do not limit the technical idea disclosed in the specification, but to the contrary, it should be construed that all modifications, equivalents, and alternatives falling within the scope of the embodiments are included.

The disclosure is to provide a method and apparatus for identifying whether a VM image is forged/falsified at the point in time at which a VM service provider registers the corresponding VM image with a marketplace of a cloud service provider (CSP). In addition, the disclosure is to provide a method and apparatus for identifying whether a VM image is forged/falsified at the point in time at which a cloud service customer operates a VM image downloaded from a marketplace of a cloud service provider (CSP). The disclosure is applicable to all service provides capable of providing a marketplace, in addition to a cloud service provider (CSP).

Hereinafter, various embodiments of the disclosure will be described in detail with reference to drawings.

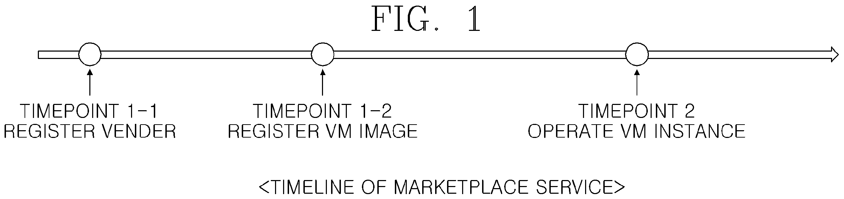

FIG. 1 is a diagram illustrating the timeline of a marketplace service provided by a cloud service provider (CSP).

As illustrated in FIG. 1, a cloud service provider (CSP) may interoperate with a VM service provider and provide a marketplace service to a cloud service customer. To this end, the VM service provider may sequentially perform a process of requesting registration of a vender with a marketplace of the cloud service provider (CSP), and a process of registering its VM image with the marketplace. The cloud service customer may perform a process of selecting and downloading at least one of a plurality of VM images registered with the marketplace of the cloud service provider (CSP), and operating a VM instance.

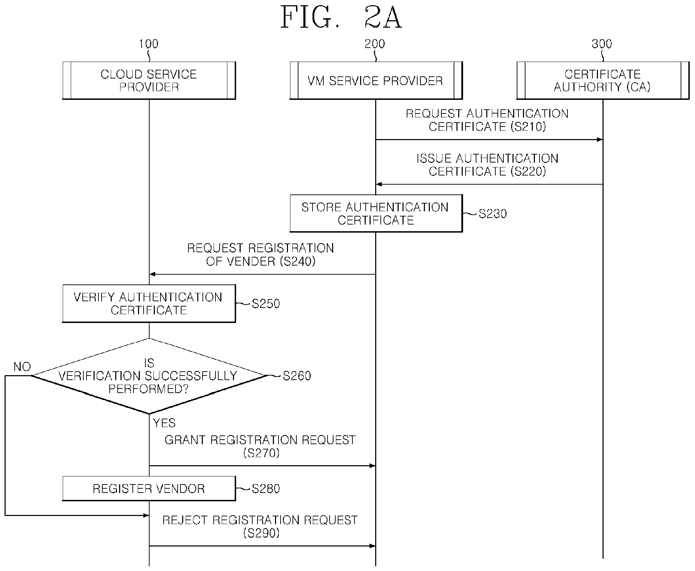

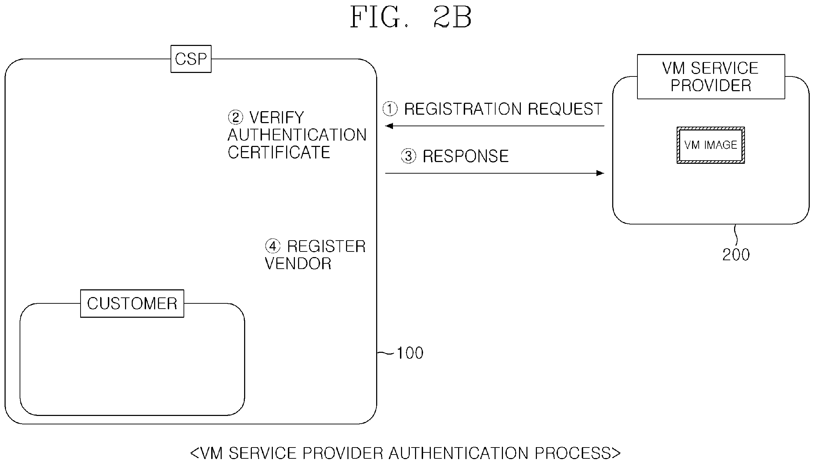

In case that the VM service provider requests registration of a vendor, the cloud service provider (CSP) may perform a procedure of authenticating the corresponding VM service provider by using an authentication certificate issued from a certificate authority (CA). The detailed description thereof will be provided with reference to FIGS. 2A and 2B.

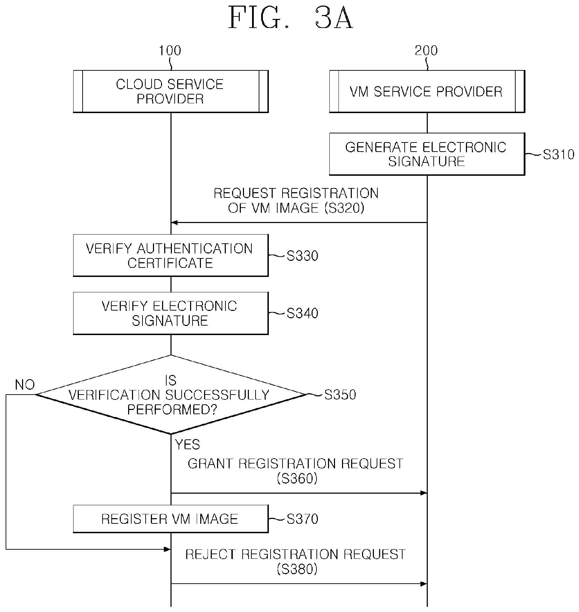

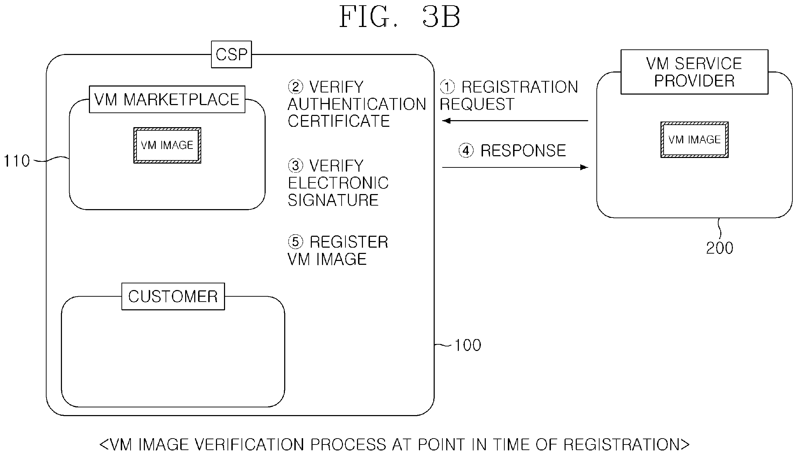

In case that the VM service provider requests registration of a VM image, the cloud service provider (CSP) may perform a procedure of identifying whether the VM image provided from the corresponding VM service provider is forged/falsified by using an authentication certificate and/or an electronic signature. The detailed description thereof will be provided with reference to FIGS. 3A and 3B.

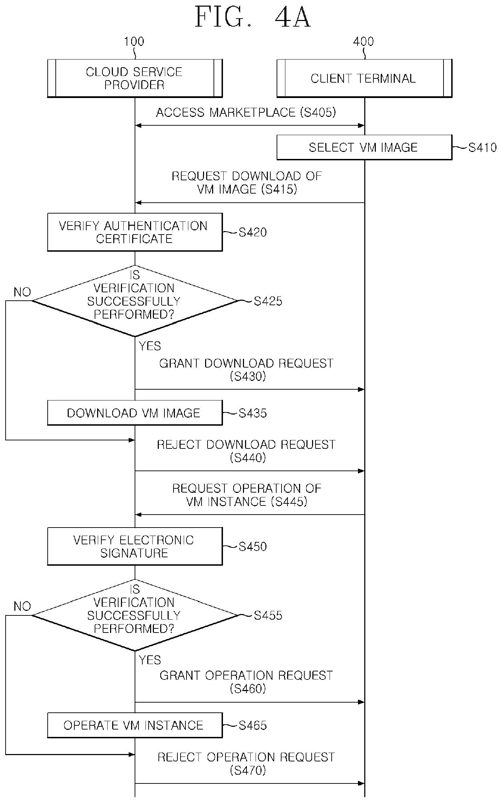

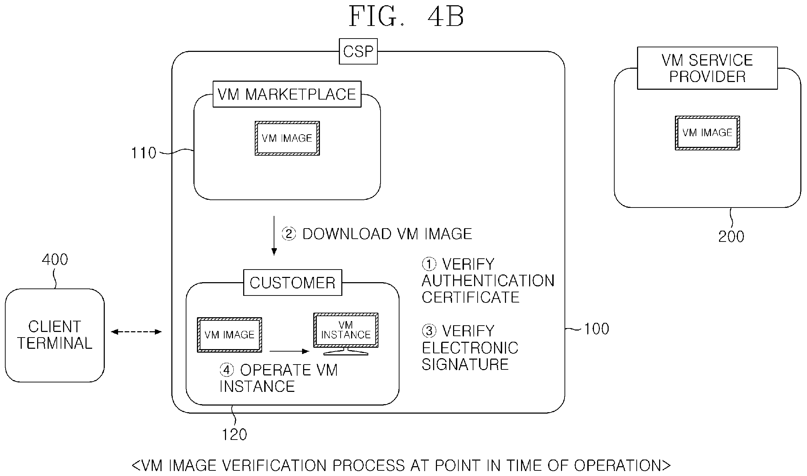

In case that the cloud service customer requests operation of a VM instance, the cloud service provider (CSP) may perform a procedure of identifying whether the VM image downloaded from the marketplace is forged/falsified by using an authentication certificate and/or an electronic signature. The detailed description thereof will be provided with reference to FIGS. 4A and 4B.

FIG. 2A is a flowchart illustrating a process of authenticating a VM service provider in the case of registration of a vendor, and FIG. 2B is a diagram to which reference is made in order to describe the authentication process of FIG. 2A. A VM service provider (vendor) authentication process according to an embodiment may be performed by a marketplace security apparatus (not illustrated) in the cloud service provider 100. The marketplace security apparatus may operate by interoperating with the VM service provider 200. The marketplace security apparatus may be embodied via a computing device including one or more processors and a memory. Although the vendor authentication process in the flowchart is illustrated as a plurality of operations, at least some operations in the flowchart may be performed in a different order, may be performed with other operations in combination, may be omitted, may be performed in detailed steps, or may be performed with one or more additional steps which are not illustrated.

Referring to FIGS. 2A and 2B, a VM service provider 200 may request issuing of an authentication certificate from a certificate authority (CA) 300 in order to verify its identity in operation S210.

The CA 300 may identify the identity of the VM service provider 200, and may issue an authentication certificate to the VM service provider 200 in operation S220.

The VM service provider 200 may store, in a storage, the authentication certificate issued from the CA 300 in operation S230.

The VM service provider 200 may transmit, to the cloud service provider 100, a message (i.e., a vendor registration request message) for requesting registration of a vendor with the marketplace of the cloud service provider 100 in operation S240. In this instance, the request message may include the authentication certificate.

As another example, the VM service provider 200 may transmit the authentication certificate to the cloud service provider 100, independently from the vendor registration request message.

The cloud service provider 100 may verify the authentication certificate obtained from the VM service provider 200 in operation S250. In this instance, the cloud service provider 100 may store, in the storage, the authentication certificate obtained from the VM service provider 200.

In case that a result of the verification shows that the authentication certificate is successfully verified in operation S260, the cloud service provider 100 may transmit a message that grants the vendor registration request to the VM service provider 200 in operation S270. Subsequently, the cloud service provider 100 may register, with the marketplace, the VM service provider 200 as a vendor in operation S280.

In case that the result of the verification shows that the verification of the authentication certificate fails in operation S260, the cloud service provider 100 may transmit a message that rejects the vendor registration request to the VM service provider 200 in operation S290.

As described above, in case that the VM service provider requests registration of a vendor, the cloud service provider (CSP) according to an embodiment of the disclosure may effectively authenticate the corresponding VM service provider by using an authentication certificate received from the corresponding VM service provider.

FIG. 3A is a flowchart illustrating a process of verifying a VM image obtained from a VM service provider in the case of registration of the VM image, and FIG. 3B is a diagram to which reference is made in order to describe the verification process of FIG. 3A. The VM image verification process according to the disclosure may be performed by a marketplace security apparatus in the cloud service provider 100. The marketplace security apparatus may operate by interoperating with the VM service provider 200. The marketplace security apparatus may be embodied via a computing device including one or more processors and a memory. Although the VM image verification process in the flowchart is illustrated as a plurality of operations, at least some operations in the flowchart may be performed in a different order, may be performed with other operations in combination, may be omitted, may be performed in detailed steps, or may be performed with one or more additional steps which are not illustrated.

Referring to FIGS. 3A and 3B, the VM service provider 200 may generate an electronic signature associated with a VM image to be registered with a marketplace of the cloud service provider 100 in operation S310. In this instance, the VM service provider 200 may generate an electronic signature by using a private key.

The VM service provider 200 may transmit, to the cloud service provider 100, a message (i.e., a VM image registration request message) for requesting registration of a VM image with the marketplace of the cloud service provider 100 in operation S320. In this instance, the request message may include at least one of a VM image, an authentication certificate, and an electronic signature.

As another example, the VM service provider 200 may transmit at least one of the VM image, the authentication certificate, and the electronic signature to the cloud service provider 100, independently from the VM image registration request message.

The cloud service provider 100 may store, in a storage, at least one of the VM image, the authentication certificate, and the electronic signature obtained from the VM service provider 200.

The cloud service provider 100 may verify the authentication certificate obtained from the VM service provider 200 in operation S330. Here, the authentication certificate may be an authentication certificate obtained from the VM service provider 200 in the VM image registration process or the vendor registration process. Depending on an embodiment of the disclosure, the corresponding operation may be configured to be omitted.

The cloud service provider 100 may verify the electronic signature obtained from the VM service provider 200 in operation S340. In this instance, the cloud service provider 100 may verify the electronic signature by using a public key.

In case that a result of the verification shows that both the authentication certificate and the electronic signature are successfully verified in operation S350, the cloud service provider 100 may transmit a message that grants the VM image registration request to the VM service provider 200 in operation S360.

By verifying the authentication certificate, the cloud service provider 100 may identify that the VM service provider 200 that provides a VM image is an authenticated vendor. In addition, the cloud service provider 100 may identify that a VM image provided by the VM service provider 200 is an original image by verifying the electronic signature.

In case that the verification is successfully performed, the cloud service provider 100 may register, with the marketplace 110, the VM image obtained from the VM service provider 200 in operation S370.

In case that the result of the verification shows that verification of at least one of the authentication certificate and the electronic signature fails in operation S350, the cloud service provider 100 may transmit a message that rejects the VM image registration request to the VM service provider 200 in operation S380.

As described above, the cloud service provider (CSP) according to an embodiment of the disclosure may identify whether the VM service provider that provides a VM image is an authenticated vendor by verifying an authenticated certificate obtained from the VM service provider in case that registration of a VM image is requested, and may identify whether the VM image provided from the VM service provider is forged/falsified by verifying an electronic signature obtained from the VM service provider.

FIG. 4A is a flowchart illustrating a process of verifying a VM image downloaded from a marketplace in the case of operation of a VM instance, and FIG. 4B is a diagram to which reference is made in order to describe the verification process of FIG. 4A. The VM image verification process according to the embodiment may be performed by a marketplace security apparatus in the cloud service provider 100. The marketplace security apparatus may operate by interoperating with a client terminal 400. The marketplace security apparatus may be embodied via a computing device including one or more processors and a memory. Although the VM image verification process in the flowchart is illustrated as a plurality of operations, at least some operations in the flowchart may be performed in a different order, may be performed with other operations in combination, may be omitted, may be performed in detailed steps, or may be performed with one or more additional steps which are not illustrated.

Referring to FIGS. 4A and 4B, the client terminal 400 may access a marketplace of the cloud service provider 100 in response to an access command from a cloud service customer in operation S405. The cloud service customer may access the marketplace so as to identify a plurality of VM images registered with the corresponding marketplace, and may purchase a desired VM image.

In response to a select command from the cloud service customer, the client terminal 400 may select at least one of the plurality of VM images registered with the marketplace in operation S410.

In response to a request command from the cloud service customer, the client terminal 400 may transmit a message that requests downloading of the selected VM image (i.e., a download request message) to the cloud service provider 100 in operation S415.

In response to the download request message, the cloud service provider 100 may identify the VM service provider 200 that provides the VM image to be downloaded, and may detect an authentication certificate obtained from the identified VM service provider 200. Here, the authentication certificate may be an authentication certificate obtained from the VM service provider 200 in the vendor registration process or the VM image registration process, and may be stored in a storage of the cloud service provider 100.

In case that the corresponding authentication certificate is not present in the storage of the cloud service provider 100, the cloud service provider 100 may request the authentication certificate from the VM service provider 200.

The cloud service provider 100 may verify the authentication certificate obtained from the VM service provider 200 in operation S420.

In case that a result of the verification in operation 420 shows that the authentication certificate is successfully verified in operation S425, the cloud service provider 100 may transmit a message that grants the VM image download request to the client terminal 400 in operations S430.

By verifying the authentication certificate, the cloud service provider 100 may identify that the VM service provider 200 that provides a VM image is an authenticated vendor.

In case that the authentication certificate is successfully verified, the cloud service provider 100 may download the VM image selected by the cloud service customer to a cloud space 120 of the corresponding customer in operation S435.

In case that the result of the verification in operation 420 shows that verification of the authentication certificate fails in operation S425, the cloud service provider 100 may transmit a message that rejects the VM image download request to the VM service provider 200 in operation S440.

Depending on an embodiment of the disclosure, the authentication verification may be configured to be omitted. In this instance, the cloud service provider 100 may download the corresponding VM image from the marketplace 110 without a separate verification process.

In response to a request command from the cloud service customer, the client terminal 400 may transmit a message (i.e., an operation request message) that requests operation of a VM instance corresponding to the VM image downloaded from the marketplace 110 in operation S445.

In response to the operation request message, the cloud service provider 100 may identify the VM service provider 200 that provides the VM image to be operated, and may detect an electronic signature obtained from the identified VM service provider 200. Here, the electronic signature may be an electronic signature obtained from the VM service provider 200 in the VM image registration process, and may be stored in a storage of the cloud service provider 100.

In case that the electronic signature of the corresponding VM image is not present in the storage of the cloud service provider 100, the cloud service provider 100 may request the corresponding electronic signature from the VM service provider 200.

The cloud service provider 100 may verify the electronic signature obtained from the VM service provider 200 in operation S450. In this instance, the cloud service provider 100 may verify the electronic signature by using a public key.

In case that a result of the verification in operation 450 shows that the electronic signature is successfully verified in operation S455, the cloud service provider 100 may transmit a message that grants the VM instance operation request to the client terminal 400 in operations S460.

The cloud service provider 100 may identify that the VM image downloaded from the marketplace 110 is an original image by verifying the electronic signature.

In case that the electronic signature is successfully verified, the cloud service provider 100 may operate, in the cloud space 120 of the customer, the VM instance corresponding to the VM image downloaded from the marketplace 110 in operation S465.

In the case of operation of the VM instance, the cloud service provider 100 may allocate a trusted platform module (TPM) so as to verify whether the VM instance normally operates. Depending on an embodiment of the disclosure, the corresponding operation may be configured to be omitted.

In case that the result of the verification in operation 450 shows that the verification of the electronic signature fails in operation S455, the cloud service provider 100 may transmit a message that rejects the VM instance operation request to the client terminal 400 in operations S470.

As described above, in case that operation of a VM instance is requested, the cloud service provider (CSP) according to an embodiment of the disclosure may identify whether a VM service provider that provides a VM image is an authenticated vendor by verifying an authenticated certificate obtained from the VM service provider, and may identify whether the VM image downloaded from the marketplace is forged/falsified by verifying an electronic signature obtained from the VM service provider.

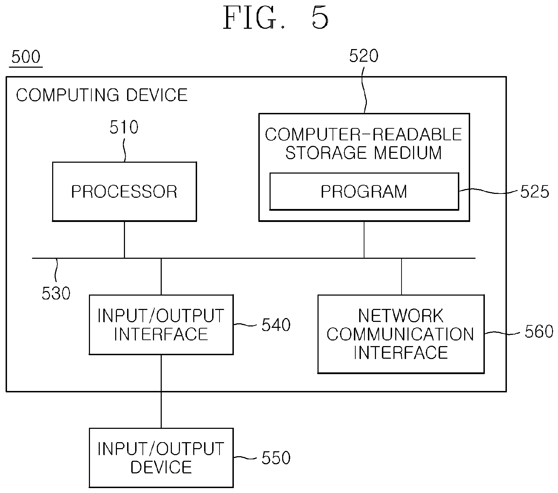

FIG. 5 is a block diagram illustrating the configuration of a computing device according to an embodiment of the disclosure.

Referring to FIG. 5, a computing device 500 according to an embodiment of the disclosure may include at least one processor 510, a computer-readable storage medium 520, and a communication bus 530. The computing device 500 may be one or more components included in the above-described marketplace security apparatus or included in elements configured with the marketplace security apparatus.

The processor 510 may enable the computing device 500 to operate according to the above-described embodiment. For example, the processor 510 may implement one or more programs 525 stored in the computer-readable storage medium 520. The one or more programs may include one or more computer-executable instructions, and the computer-executable instructions may be configured to enable the computing device 500 to perform operations according to embodiments when the computer-executable instructions are executed by the processor 510.

The computer-readable storage medium 520 may be configured to store a computer-executable instruction or program code, program data, and/or other appropriate types of information. The program 525 stored in the computer-readable storage medium 520 may include a set of instructions executable by the processor 510. According to an embodiment, the computer-readable storage medium 520 may be memory (volatile memory such as random access memory, non-volatile memory, or an appropriate combination thereof), one or more magnetic disk storage devices, optical disk storage devices, flash memory devices, and other types of storage media capable of storing information desired or accessed by the computing device 500, or an appropriate combination thereof.

The communication bus 530 may include the processor 510 and the computer-readable storage medium 520, and may mutually connect various other components of the computing device 500.

The computing device 500 may include one or more input/output interfaces 540 that provide interfaces for one or more input/output devices 550, and one or more network communication interfaces 560. The input/output interface 540 and the network communication interface 560 may be connected to the communication bus 530.

The input/output device 550 may be connected to other components of the computing device 500 via the input/output interface 540. The illustrated input/output device 550 may include a pointing device (a mouse, a trackpad, or the like), a keyboard, a touch input device (a touch pad, a touch screen, or the like), a voice or sound input device, various types of sensor devices, and/or an input device such as a photographing device, and/or an output device such as a display device, a printer, a speaker, and/or a network card. The illustrated input/output device 550 may be included in the computing device 500 as one of the components included in the computing device 500, or may be connected to the computing device 500 as a separate device from the computing device 500.

As described above, the effect of the marketplace security method and the apparatus therefor according to embodiments of the disclosure are as follow.

According to at least one of the embodiments of the disclosure, the method and apparatus may identify whether a VM service provider that provides a VM image is an authenticated vendor by verifying an authenticated certificate obtained from the VM service provider in case that registration of a VM image is requested, and may identify whether the VM image provided from the VM service provider is forged/falsified by verifying an electronic signature obtained from the VM service provider, which are advantageous.

In addition, according to at least one of the embodiments of the disclosure, the method and apparatus may identify whether a VM service provider that provides a VM image is an authenticated vendor by verifying an authenticated certificate obtained from the VM service provider in case that a cloud service customer requests operation of a VM instance, and may identify whether the VM image downloaded from the marketplace is forged/falsified by verifying an electronic signature obtained from the VM service provider, which are advantageous.

Effects that could be obtained by the marketplace security method and the apparatus therefor according to the embodiments of the disclosure are not limited to the above-described effects, and based on the descriptions provided below, those skilled in the art could clearly understand other effects which are not mentioned.

The above-described disclosure may be implemented using computer-readable code in a medium in which a program is recorded. The computer-readable storage medium may continuously store a computer-executable program, or may temporarily store the same for execution or downloading. In addition, a storage medium may be one of the various types of recording devices or storage devices provided in a single entity or in a form in which a plurality of pieces of hardware are combined, and the storage medium is not limited to a medium that directly accesses a predetermined computer system, and may be distributed in a network. Examples of the medium may include a magnetic medium such as a hard disk, a floppy disk, and a magnetic tape, an optical recording medium such as CD-ROM and DVD, a magneto-optical medium such as a floptical disk or the like, and ROM, RAM, flash memory, and the like, which are configured to store program instructions. In addition, examples of another medium may include a recording medium or a storage medium managed by an app store that distributes applications, a site that supplies or distributes various types of software, a server, or the like. Therefore, the detailed description should not be construed restrictively in all aspects, and may be considered as an example. The scope of the disclosure should be determined by rational interpretation of attached claims, and all modifications made in the scope equivalent to that of the disclosure should be included in the scope of the disclosure.

## Claims

1. A marketplace security method implemented by a cloud service provider (100), the method comprising:
registering (S280) a virtual machine, VM, service provider (200) with a marketplace (110) of the cloud service provider as a vendor;
registering (S370) a VM image provided by the VM service provider (200) with the marketplace (110);
downloading (S435) the VM image selected by a cloud service customer from the marketplace (110) into a cloud space (120) of the cloud service customer;
obtaining an electronic signature associated with the downloaded VM image in response to an operation request (S445) of the cloud service customer;
verifying (S450) the obtained electronic signature; and
in case the electronic signature is successfully verified, operating (5465) a VM instance corresponding to the downloaded VM image in the cloud space (120) of the cloud service customer, wherein the downloading (S435) comprises:
in response to a download request from the cloud service customer, identifying the VM service provider (200) that provides the VM image selected by the cloud service customer;
detecting an authentication certificate issued from a certificate authority (300) and obtained from the identified VM service provider (200) in the vendor registration process or the registration process of the VM image;
verifying the detected authentication certificate; and
in case the authentication certificate is successfully verified (S425), downloading the selected VM image from the marketplace (110).

2. The method of claim 1, wherein the obtaining comprises obtaining the electronic signature from a storage of the cloud service provider (100) or from the VM service provider (200) that provides the VM image.

3. The method of claim 1, further comprises: identifying, by the verifying of the electronic signature, whether the VM image downloaded from the marketplace (110) is forged or falsified.

4. The method of claim 1, further comprising allocating a trusted platform module, TPM, so as to verify whether the VM instance operates normally.

5. The method of claim 1, further comprising:
when a message for requesting registration of a VM image is received from the virtual machine, VM, service provider, determining whether to register the VM image with the marketplace (110) using at least one of an electronic signature or an authentication certificate.

6. The method of claim 5, wherein the message for requesting comprises at least one of a VM image, an authentication certificate, and an electronic signature.

7. A marketplace security apparatus including one or more processors and a memory, wherein the one or more processors are configured to:
register a virtual machine, VM, service provider (200) with a marketplace (110) of the cloud service provider as a vendor;
register (S370) a VM image provided by the VM service provider (200) with the marketplace (110);
download (S435) the VM image selected by a cloud service customer from the marketplace (110) to a cloud space (120) of the cloud service customer;
obtain an electronic signature associated with the downloaded VM image in response to an operation request (S445) of the cloud service customer;
verify (S450) the obtained electronic signature; and
in case the electronic signature is successfully verified operate a VM instance corresponding to the downloaded VM image in the cloud space (120) of the cloud service customer,
wherein the one or more processors are further configured to:
identify the VM service provider (200) that provides the VM image selected by the cloud service customer in response to a download request from the cloud service customer;
detect an authentication certificate issued from a certificate authority (300) and obtained from the identified VM service provider (200) in the vendor registration process or the registration process of the VM image;
verify the detected authentication certificate; and wherein, in case the authentication certificate is successfully verified, the selected VM image is downloaded from the marketplace (110).

8. The apparatus of claim 7, wherein the one or more processors are configured to obtain the electronic signature from a storage of the cloud service provider (100) or from the VM service provider (200) that provides the VM image.

9. The apparatus of claim 7, wherein the one or more processors are configured to identify, by verifying the electronic signature, whether the VM image downloaded from the marketplace (110) is forged or falsified.

10. The apparatus of claim 7, wherein the one or more processors are further configured to perform allocating of a trusted platform module, TPM, so as to verify of whether the VM instance operates normally.

11. The apparatus of claim 7,
wherein the one or more processors are further configured to, when a message for requesting registration of a VM image is received from the virtual machine, VM, service provider, determine whether to register the VM image with the marketplace (110) using at least one of an electronic signature or an authentication certificate.

12. The apparatus of claim 11, wherein the message for requesting comprises at least one of a VM image, an authentication certificate, and an electronic signature.

## Patentansprüche

1. Marktplatzsicherheitsverfahren, das durch einen Cloud-Dienstanbieter (100) implementiert wird, wobei das Verfahren Folgendes umfasst:
Registrieren (S280) eines Dienstanbieters (200) einer virtuellen Maschine (VM) bei einem Marktplatz (110) des Cloud-Dienstanbieters als Anbieter;
Registrieren (S370) eines vom VM-Dienstanbieter (200) bereitgestellten VM-Bildes beim Marktplatz (110);
Herunterladen (S435) des von einem Cloud-Dienstkunden ausgewählten VM-Bildes vom Marktplatz (110) in einen Cloud-Raum (120) des Cloud-Dienstkunden;
Erhalten einer elektronischen Signatur, die mit dem heruntergeladenen VM-Bild assoziiert ist, als Reaktion auf eine Operationsanforderung (S445) des Cloud-Dienstkunden;
Überprüfen (S450) der erhaltenen elektronischen Signatur; und
falls die elektronische Signatur erfolgreich verifiziert wurde, Betreiben (S465) einer VM-Instanz, die dem heruntergeladenen VM-Bild in dem Cloud-Raum (120) des Cloud-Dienstkunden entspricht,
wobei das Herunterladen (S435) Folgendes umfasst:
als Reaktion auf eine Download-Anforderung von dem Cloud-Dienstkunden, Identifizieren des VM-Dienstanbieters (200), der das VM-Bild bereitstellt, das durch den Cloud-Dienstkunden ausgewählt wird;
Erkennen eines Authentifizierungszertifikats, das von einer Zertifizierungsbehörde (300) ausgestellt und von dem identifizierten VM-Dienstanbieter (200) erhalten wurde, in dem Anbieterregistrierungsprozess oder Registrierungsprozess des VM-Bildes;
Verifizieren des erkannten Authentifizierungszertifikats; und falls das Authentifizierungszertifikat erfolgreich verifiziert wurde (S425), Herunterladen des ausgewählten VM-Bildes vom Marktplatz (110).

2. Verfahren nach Anspruch 1, wobei das Erhalten das Erhalten der elektronischen Signatur von einem Speicher des Cloud-Dienstanbieters (100) oder von dem VM-Dienstanbieter (200), der das VM-Bild bereitstellt, umfasst.

3. Verfahren nach Anspruch 1, das ferner Folgendes umfasst: Identifizieren, durch das Verifizieren der elektronischen Signatur, ob das VM-Bild, das von dem Marktplatz (110) heruntergeladen wird, falsch oder gefälscht ist.

4. Verfahren nach Anspruch 1, das ferner das Zuordnen eines vertrauenswürdigen Plattformmoduls (TPM) umfasst, um zu verifizieren, ob die VM-Instanz normal arbeitet.

5. Verfahren nach Anspruch 1, das ferner Folgendes umfasst:
wenn eine Nachricht zum Anfordern einer Registrierung eines VM-Bildes von dem Dienstanbieter der virtuellen Maschine (VM) empfangen wird, Bestimmen, ob das VM-Bild unter Verwendung einer elektronischen Signatur und/oder eines Authentifizierungszertifikats bei dem Marktplatz (110) registriert werden soll.

6. Verfahren nach Anspruch 5, wobei die Nachricht zum Anfordern ein VM-Bild und/oder ein Authentifizierungszertifikat und/oder eine elektronische Signatur umfasst.

7. Marktplatzsicherheitsvorrichtung, die einen oder mehrere Prozessoren und einen Speicher aufweist, wobei der eine oder die mehreren Prozessoren für Folgendes ausgebildet sind:
Registrieren eines Dienstanbieters (200) einer virtuellen Maschine (VM) bei einem Marktplatz (110) des Cloud-Dienstanbieters als Anbieter;
Registrieren (S370) eines VM-Bildes, das vom VM-Dienstanbieter (200) bereitgestellt wird, beim Marktplatz (110);
Herunterladen (S435) des von einem Cloud-Dienstkunden ausgewählten VM-Bildes vom Marktplatz (110) in einen Cloud-Raum (120) des Cloud-Dienstkunden;
Erhalten einer elektronischen Signatur, die mit dem heruntergeladenen VM-Bild assoziiert ist, als Reaktion auf eine Operationsanforderung (S445) des Cloud-Dienstkunden;
Überprüfen (S450) der erhaltenen elektronischen Signatur; und
falls die elektronische Signatur erfolgreich verifiziert ist, Betreiben einer VM-Instanz entsprechend dem heruntergeladenen VM-Bild in dem Cloud-Raum (120) des Cloud-Dienstkunden,
wobei der eine oder die mehreren Prozessoren ferner zu Folgendem ausgebildet sind:
Identifizieren des VM-Dienstanbieters (200), der das durch den Cloud-Dienstkunden ausgewählte VM-Bild als Reaktion auf eine Download-Anforderung von dem Cloud-Dienstkunden bereitstellt;
Erkennen eines Authentifizierungszertifikats, das von einer Zertifizierungsbehörde (300) ausgestellt und von dem identifizierten VM-Dienstanbieter (200) in dem Anbieterregistrierungsprozess oder dem Registrierungsprozess des VM-Bildes erhalten wurde;
Überprüfen des erkannten Authentifizierungszertifikats; und
wobei, falls das Authentifizierungszertifikat erfolgreich verifiziert wurde, das ausgewählte VM-Bild von dem Marktplatz heruntergeladen wird (110).

8. Vorrichtung nach Anspruch 7, wobei der eine oder die mehreren Prozessoren dazu ausgebildet sind, die elektronische Signatur von einem Speicher des Cloud-Dienstanbieters (100) oder von dem VM-Dienstanbieter (200), der das VM-Bild bereitstellt, zu erhalten.

9. Vorrichtung nach Anspruch 7, wobei der eine oder die mehreren Prozessoren dazu ausgebildet sind, durch Verifizieren der elektronischen Signatur zu identifizieren, ob das von dem Marktplatz (110) heruntergeladene VM-Bild falsch oder gefälscht ist.

10. Vorrichtung nach Anspruch 7, wobei der eine oder die mehreren Prozessoren ferner dazu ausgebildet sind, das Zuordnen eines vertrauenswürdigen Plattformmoduls (TPM) durchzuführen, um zu verifizieren, ob die VM-Instanz normal arbeitet.

11. Vorrichtung nach Anspruch 7,
wobei der eine oder die mehreren Prozessoren ferner dazu ausgebildet sind, wenn eine Nachricht zum Anfordern einer Registrierung eines VM-Bildes von dem Dienstanbieter der virtuellen Maschine (VM) empfangen wird, zu bestimmen, ob das VM-Bild unter Verwendung einer elektronischen Signatur und/oder eines Authentifizierungszertifikats bei dem Marktplatz (110) registriert werden soll.

12. Vorrichtung nach Anspruch 11, wobei die Nachricht zum Anfordern ein VM-Bild und/oder ein Authentifizierungszertifikat und/oder eine elektronische Signatur umfasst.

## Revendications

1. Procédé de sécurité de place de marché mis en œuvre par un fournisseur de services en nuage (100), le procédé comprenant les étapes suivantes :
enregistrer (S280) un fournisseur de services de machine virtuelle, VM, (200) auprès d'une place de marché (110) du fournisseur de services en nuage en tant que vendeur ;
enregistrer (S370) une image de VM fournie par le fournisseur de services de VM (200) auprès de la place de marché (110) ;
télécharger (S435) l'image de VM sélectionnée par un client de service en nuage à partir de la place de marché (110) dans un espace en nuage (120) du client de service en nuage ;
obtenir une signature électronique associée à l'image de VM téléchargée en réponse à une demande d'opération (S445) du client du service en nuage ;
vérifier (S450) la signature électronique obtenue ; et
dans le cas où la signature électronique est vérifiée avec succès, faire fonctionner (S465) une instance de VM correspondant à l'image de VM téléchargée dans l'espace en nuage (120) du client de service en nuage,
où le téléchargement (S435) comprend les étapes suivantes :
en réponse à une demande de téléchargement du client de service en nuage, identifier le fournisseur de service VM (200) qui fournit l'image de VM sélectionnée par le client de service en nuage ;
détecter un certificat d'authentification émis par une autorité de certification (300) et obtenu auprès du fournisseur de services de VM identifié (200) dans le cadre du processus d'enregistrement du fournisseur ou du processus d'enregistrement de l'image de VM ;
vérifier le certificat d'authentification détecté ; et,
dans le cas où le certificat d'authentification est vérifié avec succès (S425), télécharger l'image de VM sélectionnée à partir de la place de marché (110).

2. Procédé selon la revendication 1, dans lequel l'obtention comprend d'obtenir la signature électronique depuis un stockage du fournisseur de services en nuage (100) ou du fournisseur de services de VM (200) qui fournit l'image de VM.

3. Procédé selon la revendication 1, comprenant en outre d'identifier, par la vérification de la signature électronique, si l'image de VM téléchargée à partir de la place de marché (110) est contrefaite ou falsifiée.

4. Procédé selon la revendication 1, comprenant en outre d'attribuer un module de plateforme de confiance, TPM, de manière à vérifier si l'instance de VM fonctionne normalement.

5. Procédé selon la revendication 1, comprenant en outre l'étape suivante :
lorsqu'un message de demande d'enregistrement d'une image de VM est reçu du fournisseur de services de machine virtuelle, VM, déterminer s'il faut enregistrer l'image de VM auprès de la place de marché (110) à l'aide d'au moins un élément parmi une signature électronique ou un certificat d'authentification.

6. Procédé selon la revendication 5, dans lequel le message de demande comprend au moins l'un parmi une image de VM, un certificat d'authentification et une signature électronique.

7. Appareil de sécurité de place de marché comprenant un ou plusieurs processeurs et une mémoire, où les un ou plusieurs processeurs sont configurés pour :
enregistrer un fournisseur de services de machine virtuelle, VM, (200) auprès d'une place de marché (110) du fournisseur de services en nuage en tant que vendeur ;
enregistrer (S370) une image de VM fournie par le fournisseur de services de VM (200) auprès de la place de marché (110) ;
télécharger (S435) l'image de VM sélectionnée par un client de service en nuage à partir de la place de marché (110) dans un espace en nuage (120) du client de service en nuage ;
obtenir une signature électronique associée à l'image de VM téléchargée en réponse à une demande d'opération (S445) du client du service en nuage ;
vérifier (S450) la signature électronique obtenue ; et
dans le cas où la signature électronique est vérifiée avec succès, faire fonctionner une instance de VM correspondant à l'image de VM téléchargée dans l'espace en nuage (120) du client de service en nuage,
où les un ou plusieurs processeurs sont en outre configurés pour :
identifier le fournisseur de services de VM (200) qui fournit l'image de VM sélectionnée par le client du service en nuage en réponse à une demande de téléchargement du client du service en nuage ;
détecter un certificat d'authentification émis par une autorité de certification (300) et obtenu auprès du fournisseur de services de VM identifié (200) dans le cadre du processus d'enregistrement du fournisseur ou du processus d'enregistrement de l'image de VM ;
vérifier le certificat d'authentification détecté ; et
où, si le certificat d'authentification est vérifié avec succès, l'image de VM sélectionnée est téléchargée à partir de la place de marché (110).

8. Appareil selon la revendication 7, dans lequel les un ou plusieurs processeurs sont configurés pour obtenir la signature électronique à partir d'un stockage du fournisseur de services en nuage (100) ou du fournisseur de services de VM (200) qui fournit l'image de VM.

9. Appareil selon la revendication 7, dans lequel les un ou plusieurs processeurs sont configurés pour identifier, en vérifiant la signature électronique, si l'image de VM téléchargée à partir de la place de marché (110) est contrefaite ou falsifiée.

10. Appareil selon la revendication 7, dans lequel les un ou plusieurs processeurs sont en outre configurés pour effectuer l'attribution d'un module de plate-forme de confiance, TPM, afin de vérifier si l'instance de VM fonctionne normalement.

11. Appareil selon la revendication 7,
dans lequel les un ou plusieurs processeurs sont en outre configurés pour, lorsqu'un message de demande d'enregistrement d'une image de VM est reçu du fournisseur de services de machine virtuelle, VM, déterminer s'il faut enregistrer l'image de VM auprès de la place de marché (110) à l'aide d'au moins un élément parmi une signature électronique ou un certificat d'authentification.

12. Appareil selon la revendication 11, dans lequel le message de demande comprend au moins l'un parmi une image de VM, un certificat d'authentification et une signature électronique.
